# EUROPÄISCHE PATENTSCHRIFT

(11) **EP 1 901 938 B1**
(45) Veröffentlichungstag und Bekanntmachung des Hinweises auf die Patenterteilung: **24.08.2016**
(21) Anmeldenummer: 06776103.1
(22) Anmeldetag: 30.06.2006
(51) Int. Cl.: B60N 2/06, B60N 2/12, B60N 2/30

(54) **ERSTE UND ZWEITE GRUPPE VON FAHRZEUGEN**
FIRST AND SECOND GROUP OF VEHICLES
PREMIER ET SECOND GROUPE DE VEHICULES

(30) Priorität: 09.07.2005 DE 102005032180
(43) Veröffentlichungstag der Anmeldung: 26.03.2008
(73) Patentinhaber: Bayerische Motoren Werke Aktiengesellschaft, 80809 München (DE)
(72) Erfinder: TIETJE, Peter, 85777 Fahrenzhausen (DE)
(74) Vertreter: Schernhammer, Herbert
(86) Internationale Anmeldenummer: PCT/EP2006/006363
(87) Internationale Veröffentlichungsnummer: WO 2007/006429

(56) Entgegenhaltungen:
- EP-A- 1 297 996
- WO-A-2006/053657
- US-A- 2 660 223
- US-A1- 2001 030 440

## Beschreibung

Die Erfindung betrifft eine erste und eine zweite Gruppe von Fahrzeugen, die Sitzkissen aufweisen.

Fahrzeuge einer Baureihe eines Fahrzeugherstellers werden üblicherweise in unterschiedlichen Ausstattungsvarianten angeboten, wobei bestimmte Ausstattungsvarianten Eingriffe in den Rohbau der Fahrzeugkarosserie erfordern. So sind in der Regel für die Realisierung von Fondsitzen mit einer Längs- und/oder Höheneinstellung des Sitzkissens Maßnahmen an der Rohbaustruktur gegenüber Fahrzeugen mit feststehenden Sitzkissen notwendig. Bei den verstellbaren Sitzkissen von Fondsitzen handelt es sich um eine vergleichsweise teure Ausstattung, die - abgesehen von Fahrzeugen der Luxusklasse - nur als Sonderausstattung angeboten wird. Durch die Rohbauvarianten ergeben sich hohe Kosten für die unterschiedlichen Werkzeuge zur Herstellung der verschiedenen Bodengruppe der Fahrzeuge. Außerdem ist der logistische Aufwand für die Steuerung der Rohbauvarianten beträchtlich.

Fahrzeuge mit längsverschieblichen Sitzkissen sind aus der US 2,660,223 und aus der EP 1 297 996 A1 bekannt. Die beiden Schriften behandeln jedoch nicht die oben beschriebene Problematik, die sich ergibt, wenn innerhalb einer Fahrzeugbaureihe einerseits Fahrzeuge mit verstellbaren Sitzkissen und andererseits Fahrzeuge ohne verstellbare Sitzkissen gefertigt werden müssen.

Aufgabe der Erfindung ist es, die bekannten Nachteile bei Fahrzeugbaureihen mit unterschiedlich ausgebildeten Fondsitzen zu vermeiden.

Diese Aufgabe wird durch Fahrzeuge mit den Merkmalen des Anspruchs 1 gelöst.

Kerngedanke der Erfindung ist es hierbei, anstelle einer zusätzlichen Rohbauvariante für die unterschiedlichen Ausführungen der Fondsitze einen einheitlichen Rohbau zu verwenden und die unterschiedlichen Sitzkissen und/oder deren unterschiedliche Anbindung an den Rohbau durch ein Zusatzteil, einen vom Rohbau unabhängigen Adapter, auszugleichen. Hauptsächlich kommt dem Adapter die Aufgabe zu, einen Höhenausgleich zu bewerkstelligen, da Fondsitze mit einer Verstellmöglichkeit einen größeren Bauraum unterhalb des Sitzkissens beanspruchen als feststehende Fondsitze. Der Adapter kann aber auch eingesetzt werden, um verschiedene geometrische Ausgestaltungen an der Unterseite von Fondsitzen auszugleichen.

Mit der Reduktion auf eine Rohbauvariante erschließt sich ein beträchtliches Kosteneinsparungspotential. Durch den Wegfall verschiedener Werkzeuge und die vereinfachte Logistik bei der Herstellung der Rohbaukarosserie sind so große Einsparungen möglich, dass sich trotz der Zusatzkosten für den Adapter ein deutlicher Kostenvorteil ergibt.

Selbstverständlich umfasst die Erfindung in analoger Weise auch mehr als zwei Gruppen von Fahrzeugen, wenn der Fahrzeughersteller mehr als zwei Varianten von Fondsitzen für die betreffende Fahrzeugbaureihe anbietet.

Zwar ist aus der JP 2000255289 A1 eine Karosserie für ein Kraftfahrzeug bekannt, die hintereinander angeordnete Sitzmulden für einen Fondsitz aufweist. Diese Sitzmulden können jedoch nicht mit Adaptern unterschiedlicher Gestalt belegt werden, sondern sind für den wahlweisen Einsatz ein- und desselben Fondsitzes entweder in die vordere oder in die hintere Mulde bestimmt. Die Erfindung betrifft demgegenüber Fondsitze mit einer Längs- und/oder Höheneinstellung des Sitzkissens zu Komfortzwecken, wobei das Sitzkissen aber nicht als Ganzes entfernbar ist oder durch Verschwenken, Umklappen oder dergleichen in eine andere Gebrauchslage überführt werden kann.

Der Adapter kann als Einzelteil ausgeführt sein, das einerseits mit dem Bodenblech der Karosserie sowie andererseits mit dem Fondsitz verbunden ist. Alternativ kann der Adapter in Baueinheit mit dem Sitzkissen ausgeführt sein. Bei dieser Variante ist erstreckt sich der Bezug des Sitzkissens bevorzugt auch über den Adapter und ist an diesem befestigt. Somit kann das Sitzkissen mit Adapter als ein integriertes Polsterteil verbaut werden.

Der Adapter kann im Tiefziehverfahren aus Stahlblech hergestellt sein. Alternativ kann der Adapter aus Aluminium, einem anderen Leichtmetallwerkstoff oder aus Kunststoff bestehen. Der Adapter kann die Form einer Wanne haben oder als Volumenbauteil, z. B. als Hartschaumteil, ausgeführt sein. Auch kann der Adapter aus einer Kombination verschiedener Werkstoffe bestehen.

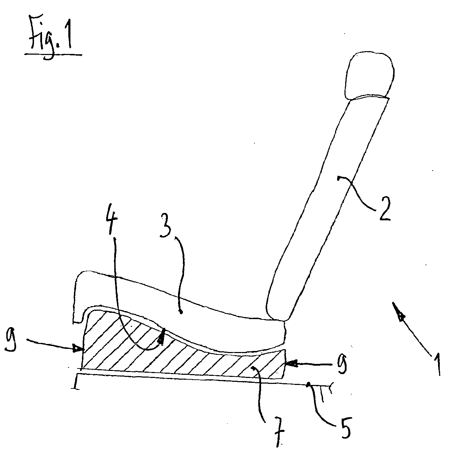

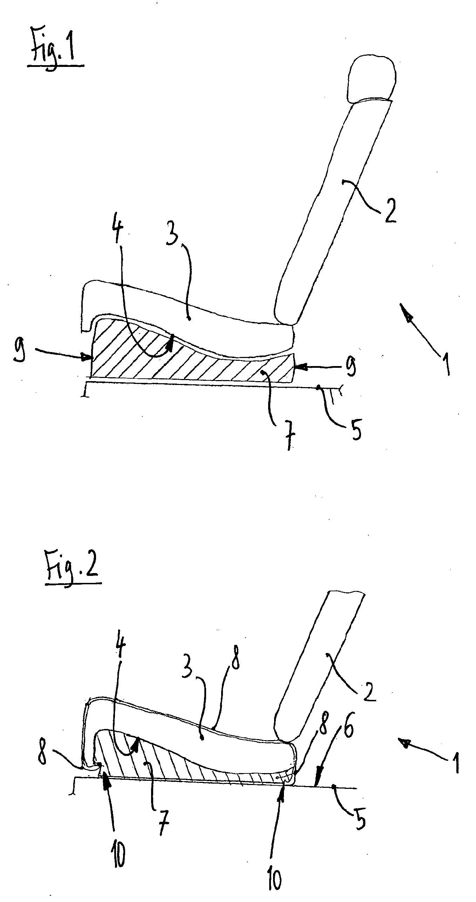

Mögliche Ausführungsbeispiele der Erfindung sind in der Zeichnung dargestellt und werden nachfolgend näher erläutert. Die Figuren 1 und 2 zeigen hierbei zwei mögliche Ausführungsformen der Erfindung.

Ein in seiner Gesamtheit mit 1 bezeichneter Fondsitz eines Kraftfahrzeuges weist eine Rückenlehne 2 sowie ein Sitzkissen 3 auf. Die Unterseite 4 des Sitzkissens 3 hat im Längsschnitt einen geschwungenen Verlauf.

Der Fondsitz 1 ist oberhalb eines Bodenbleches 5 der Fahrzeugkarosserie angeordnet. Erfindungsgemäß ist zwischen der Unterseite 4 des Sitzkissens 3 und der Oberseite 6 des Bodenbleches 5 ein Adapter 7 vorgesehen.

Durch den Adapter 7 werden bei den vorliegenden Ausführungsbeispielen unterschiedlich hohe Anbindungsniveaus verschiedener Fondsitze 1 ausgeglichen. Diese unterschiedlichen Niveaus kommen dadurch zustande, dass innerhalb einer Fahrzeugbaureihe eines Fahrzeugherstellers verschiedene Ausstattungsvarianten von Fondsitzen 1 verbaut werden. So werden insbesondere bei gehobenen Fahrzeugklassen Fondsitze 1 angeboten, deren Sitzkissen 3 in Längsrichtung und/oder in Höhenrichtung verstellbar sind. Damit wird, ähnlich wie dies bei Vordersitzen von Kraftfahrzeugen allgemein üblich ist, eine Anpassung an unterschiedliche Körpergrößen, Körperkonstitutionen und Sitzgewohnheiten von Insassen erreicht, im Sinn einer Erhöhung des Sitzkomforts. Da es sich bei den verstellbaren Sitzkissen 3 der Fondsitze 1 um eine vergleichsweise teuere Ausstattung handelt, wird diese - abgesehen von Fahrzeugen der Luxusklasse - nur als Sonderausstattung angeboten. Um innerhalb einer Fahrzeugbaureihe bei Fahrzeugen einerseits mit, andererseits ohne verstellbare Sitzkissen 3 einen einheitlichen Rohbau mit einheitlichem Niveau des Bodenbleches 5 fertigen zu können, ist erfindungsgemäß ein Adapter 7 zum Ausgleich unterschiedlicher Höhen und/oder Bauteilgeometrien vorgesehen. Der Adapter 7 wird erfindungsgemäss bei denjenigen Fondsitzen 1 verwendet, die nicht höhen- und/oder längsverstellbar sind, also einen kleineren "Unterbau" benötigen als die verstellbaren Fondsitze 1. Die beiden Figuren 1 und 2 zeigen demzufolge derartige feststehende Fondsitze 1 ohne Verstellmechanik und mit Adapter 7.

Bei Fondsitzen 1 mit Verstellmöglichkeit tritt an die Stelle des Adapters 7 eine Verstellmechanik (nicht dargestellt), die auf der im wesentlichen ebenen Oberseite 6 des Bodenbleches 5 aufsetzt.

Die Figuren 1 und 2 zeigen unterschiedlich hohe Adapter 7 für verschiedene Fahrzeugausführungen innerhalb einer Fahrzeugbaureihe, wie beispielsweise Limousine oder Coupe oder Kombinationsbauart, bei denen ein einheitliches Bodenblech 5 verwendet wird, jedoch unterschiedliche Varianten von Fondsitzen 1 und/oder unterschiedliche Verstellmechanismen. Die unterschiedliche Höhe der Adapter 7 ist vor allem durch die Art des Verstellmechanismus und den Umfang der Verstellmöglichkeiten bedingt.

Zusätzlich zum Höhenausgleich oder anstelle des Höhenausgleichs kann den Adaptern 7 die Aufgabe zukommen, unterschiedliche geometrische Formen auszugleichen, die je nach Ausführung des Fondsitzes 1 an der Unterseite 4 der Sitzkissen 3 vorliegen.

Die in den Figuren 1 und 2 dargestellten Adaptern 7 sind in unterschiedlicher Weise an die zugehörigen Sitzkissen 3 angebunden. Gemäß Fig. 1 ist der Adapter 7 als separates Bauteil ausgeführt, das einerseits mit der Oberseite 6 des Bodenbleches 5 und andererseits mit der Unterseite 4 des Sitzkissens 3 verbunden ist. Demgegenüber ist der Adapter 7 gemäß Fig. 2 in Baueinheit mit dem Sitzkissen 3 des Fondsitzes 1 ausgebildet, wobei der Bezug 8 des Sitzkissens 3 auch Abschnitte des Adapters 7 überdeckt, wie die vordere und die hintere Stirnseite 9 des Sitzkissens 3. Auch die in Fig. 2 nicht ersichtlichen seitlichen Stirnflächen des Adapters 7 sind vom Bezug 8 überdeckt. Der Bezug 8 ist über Befestigungseinrichtungen 10 an der vorderen Stirnseite 9 und an der Unterseite des Adapters 7 an diesem befestigt.

## Patentansprüche

1. Erste und zweite Gruppe von Fahrzeugen, wobei die Fahrzeuge im wesentlichen baugleich sind und Fondsitze (1)
aufweisen, die an einem Bodenblech (5)
des Fahrzeugs angeordnet sind, wobei die Fondsitze der ersten Gruppe von Fahrzeugen feststehende Sitzkissen (3)
ohne Verstellmechanik und die
Fondsitze der zweiten Gruppe von Fahrzeugen verstellbare Sitzkissen mit Verstellmechanik aufweisen, wobei die verstellbaren Sitzkissen als Sonderausstattung angeboten werden, und die beiden Gruppen von Fahrzeugen baugleiche Bodenbleche (5) aufweisen und zum Ausgleich der unterschiedlichen Ausgestaltungen der Fondsitze (1) bei wenigstens einer Gruppe von Fahrzeugen Adapter (7) zwischen der Oberseite (6) des Bodenbleches (5) und der Unterseite (4) der Sitzkissen (3) angeordnet sind, wobei die Adapter (7) bei der Gruppe von Fahrzeugen verwendet sind, deren Fondsitze (1) nicht höhen- und/oder längsverstellbar sind.

2. Gruppe von Fahrzeugen nach Anspruch 1,
**dadurch gekennzeichnet, dass** der Adapter (7) und das Sitzkissen (3) in Baueinheit ausgeführt sind.

3. Gruppe von Fahrzeugen nach Anspruch 1,
**dadurch gekennzeichnet, dass** der Adapter (7) als separates Bauteil ausgeführt ist.

4. Gruppe von Fahrzeugen nach einem der vorgenannten Ansprüche, **gekennzeichnet durch** einen Bezug (8) für das Sitzkissen (3), der zusätzlich auch wenigstens einen Abschnitt (9) des Adapters (7) überdeckt und am Adapter (7) befestigt ist.

5. Gruppe von Fahrzeugen nach einem der vorgenannten Ansprüche, **dadurch gekennzeichnet, dass** der Adapter (7) im Tiefziehverfahren aus Stahlblech hergestellt ist.

6. Gruppe von Fahrzeugen nach einem der vorgenannten Ansprüche, **dadurch gekennzeichnet, dass** der Adapter (7) die Form einer Wanne hat.

7. Gruppe von Fahrzeugen nach einem der Ansprüche 1 bis 5,
**dadurch gekennzeichnet, dass** der Adapter (7) als Volumenbauteil, zum Beispiel als Hartschaumteil, ausgeführt ist.

## Claims

1. A first and second group of vehicles, wherein the vehicles are essentially of an identical construction and have rear seats (1) which are arranged on a floor pan (5) of the vehicle, wherein the rear seats of the first group of vehicles have fixed seat cushions (3) without an adjustment mechanism and the rear seats of the second group of vehicles have adjustable seat cushions with an adjustment mechanism, the adjustable seat cushions being supplied as extras, and the two groups of vehicles have identically constructed floor pans (5) and in order to compensate for the different configurations of the rear seats (1), for at least one group of vehicles, adapters (7) are arranged between the upper side (6) of the floor pan (5) and the underside (4) of the seat cushion (3), the adapters (7) being used for the group of vehicles, the rear seats (1) of which cannot be adjusted in height and/or length.

2. A group of vehicles according to claim 1, **characterised in that** the adapter (7) and the seat cushion (3) are configured in one constructional unit.

3. A group of vehicles according to claim 1, **characterised in that** the adapter (7) is configured as a separate component.

4. A group of vehicles according to any one of the preceding claims, **characterised by** a cover (8) for the seat cushion (3) which furthermore also covers at least one portion (9) of the adapter (7) and is attached to the adapter (7).

5. A group of vehicles according to any one of the preceding claims, **characterised in that** the adapter (7) is produced from sheet steel in the deep-drawing process.

6. A group of vehicles according to any one of the preceding claims, **characterised in that** the adapter (7) is in the shape of a trough.

7. A group of vehicles according to any one of claims 1 to 5, **characterised in that** the adapter (7) is configured as a volume component, for example as a rigid foam part.

## Revendications

1. Premier et second groupes de véhicules, ces véhicules étant de construction essentiellement identique et comprenant des sièges arrières (1) qui sont montés sur une tôle de sol (5) du véhicule, les sièges arrières des véhicules du premier groupe comprenant des coussins (3) fixes sans mécanisme de réglage et les sièges arrière des véhicules du second groupe comprenant des coussins réglables équipés d'un mécanisme de réglage, les coussins réglables étant proposés sous la forme d'équipement en option, les deux groupes de véhicules comportant des tôles de sol (5) de construction identique, et pour permettre de compenser les différentes configurations des sièges arrières (1), pour au moins l'un des groupes de véhicules, des adaptateurs (7) étant montés entre la face supérieure (6) de la tôle de sol (5) et la face inférieure (4) des coussins (3), les adaptateurs (7) étant utilisés dans le groupe de véhicules dont les sièges arrières (1) ne sont pas réglable en hauteur et/ou en longueur.

2. Groupe de véhicules conforme à la revendication 1,
**caractérisé en ce que**
les adaptateurs (7) et les coussins (3) sont réalisés selon une unité de construction.

3. Groupe de véhicules conforme à la revendication 1,
**caractérisé en ce que**
l'adaptateur (7) constitue un élément séparé.

4. Groupe de véhicules conforme à l'une des revendications précédentes,
**caractérisé par**
une housse (8) du coussin (3) qui recouvre en outre au moins un segment (9) de l'adaptateur (7) et est fixée sur cet adaptateur (7).

5. Groupe de véhicules conforme à l'une des revendications précédentes,
**caractérisé en ce que**
l'adaptateur (7) est réalisé en tôle d'acier par la mise en oeuvre d'un procédé d'emboutissage.

6. Groupe de véhicules conforme à l'une des revendications précédentes,
**caractérisé en ce que**
l'adaptateur (7) a la forme d'une cuvette.

7. Groupe de véhicules conforme à l'une des revendications 1 à 5,
**caractérisé en ce que**
l'adaptateur (7) est réalisé sous la forme d'un composant en volume, par exemple un élément en mousse dure.
